# EUROPEAN PATENT SPECIFICATION

(11) **EP 1 708 177 B1**
(45) Date of publication and mention of the grant of the patent: **26.11.2008**
(21) Application number: 06005963.1
(22) Date of filing: 23.03.2006
(51) Int. Cl.: G11B 7/0037, G11B 7/085

(54) **Method for reading media information from optical recording media**
Verfahren zum Lesen von Medieninformationen optischer Aufzeichnungsmedien
Procédé de lecture d'informations de support à partir d'un support d'enregistrement optique

(30) Priority: 23.03.2005 KR 2005023989
(43) Date of publication of application: 04.10.2006
(73) Proprietor: Hitachi-LG Data Storage Korea Inc., Seoul 150-010 (KR)
(72) Inventor: Park, Jeong Gyu, Incheon-si, 417-891 (KR)
(74) Representative: TER MEER - STEINMEISTER & PARTNER GbR

(56) References cited:
- EP-A2- 1 367 570
- US-A1- 2004 004 912
- US-A1- 2005 058 044

## Description

### BACKGROUND OF THE INVENTION

### Field of the Invention

The invention is related to a method for reading media information, and, more particularly, to a method for stably reading media information from optical recording media on which a label may be printed.

### Description of the Related Art

Optical discs have been developed recently which allow data to be recorded on a data surface of the disc, and a label with a desired design to be printed on a non-data, or label surface opposite the data surface of the disk. Labels are typically transferred onto the label surface of the disc using a laser etching technology commonly referred to as LightScribe, in which a laser burns or etches an image onto a specially prepared, non-data side of a LightScribe optical disc.

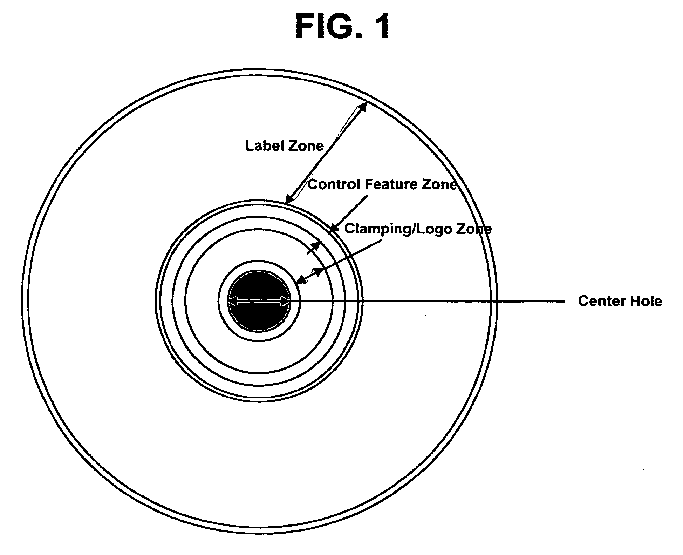

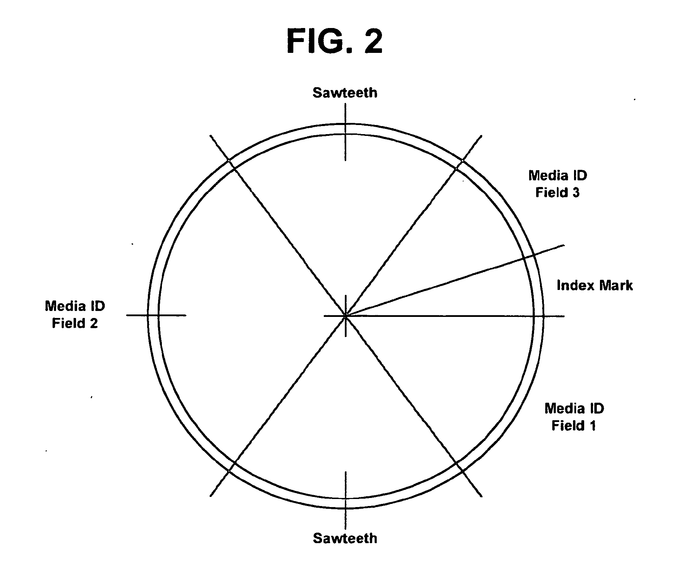

A layout of an exemplary label surface of this type of recording media is shown in Fig. 1, and Fig. 2 illustrates a control feature outer ring (CFOR) area located in the control feature zone of the exemplary recording media shown in Fig. 1. The CFOR area includes an index mark indicative of the CFOR area, and media information such as a media ID, in which the media ID is classified by three non-continuous fields and recorded therein.

When data is recorded to a data recording surface of a disc, the data recording surface generates a tracking guide signal, such as a Wobble signal, allowing a tracking servo operation which compensates for eccentricity of the disc to be performed. However, a label surface of an optical disc such as, for example, the LightScribe disc discussed above, is not equipped generate a guide signal, and thus a printing operation on the label surface of the disc may be easily affected by eccentricity of the disc.

In order to print a label on the label surface of this type of recording media, the recording media is inserted into an optical disc drive, and an optical pick-up moves to the CFOR area using the index mark and reads media information such as, for example, media ID, from the CFOR area. The media information, which may include media ID classified by three non-continuous fields, is sequentially read and then transmitted to an external host, such as, for example, a personal computer.

The host compares the transmitted media ID with a media ID stored in a database, and then determines whether the media ID has been normally read from the disc. If any one of the three classified media IDs is not normally read, due to, for example an eccentricity component, the optical pick-up is returned to the CFOR area and the media information is read once again. This process is repeated until the required information is normally read.

There are disadvantages to this method in that, when an operation for reading information from the CFOR area experiences instability due to, for example, an eccentricity component of the recording media, the continuous reading of information from the CFOR area until the required media information is obtained is relatively time consuming, thus delaying a recording operation on the label surface of the recording media.
US 2005/058,044 A1 discloses an optical disc that includes disc speed features and disc angular orientation features. The disc speed features are read by an encoder whereas the disc angular orientation features are readable by an optical pick-up unit of an optical disc drive.
These features are used to control the rotation of the disc that has a writable label surface.
However. US 2005/058,044 A1 is completely silent about reading medium information identifying the optical recording medium from the label surface thereof.
EP 1 367 570 A2 is concerned with a method of forming an image of an optical disc by radially vibrating a laser beam under focus control and discloses the feature that a laser beam is vibrated in a radial direction of an optical disc when images are recorded on a label surface opposite to a recording surface.
The optical disc comprises a recording layer that is provided with a spiral groove and a corresponding land formed therein for detecting a tracking error signal by detecting the intensity of a main beam and two sub-beams of an optical pick-up device reflected by the recording layer.

### SUMMARY OF THE INVENTION

An object of the invention is to solve at least the above problems and/or disadvantages and to provide at least the advantages described hereinafter.

Therefore, it is an object of the invention to provide a method for reading media information from optical recording media which is capable of stably reading media information recorded on the label surface of a LightScribe recording media.

It is another object of the invention to provide a method for reading media information from optical recording media which is capable of detecting a position to stably read media information recorded on a label surface of a LightScribe recording media.

In accordance with an embodiment of the invention as broadly described herein, the above and other objects can be accomplished in whole or in part by the provision of a method for reading media information from optical recording media which includes checking whether a data pattern is detected at a plurality of positions spaced at predetermined intervals in the radial direction of a recording media, selecting a position between the positions in which the data pattern is successively detected, and reading media information at the selected position.

In accordance with another embodiment of the invention, there is provided a method for reading media information of optical recording media which includes reading media information at positions at which a data pattern is detected out of a plurality of positions spaced at predetermined intervals in the radial direction of a recording media, and storing the media information therein, and selecting media information which is read and stored at one out of positions at which the data patterns are successively detected.

Preferably, the recording media includes a LightScribe disc, the data pattern is an index mark, and an area in which the data pattern is detected is a control feature outer ring area.

Preferably, the predetermined interval is set such that three positions or more of the plurality of positions are located at the control feature outer ring area, preferably, equal to or less than 250µm.

Preferably, when the predetermined interval is between 150µm ∼ 250µm, a determination is made as to whether the data pattern is detected, and media information is read and stored therein, only at from a first position in which the data pattern is firstly detected to three positions, including the first position, following the first position.

Preferably, when the data pattern is successively detected at (2n-1) positions, the n-th position is selected. Also, when the data pattern is successively detected at 2n positions, a center position between the first and the last position is selected.

Preferably, the data pattern is detected, while a pickup is moved from the innermost position of the plurality of positions to the outermost position in the radial direction of the recording media, or vise versa.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements, wherein:

Fig. 1 illustrates a layout of a label side of an exemplary recording medium;

Fig. 2 illustrates a control feature outer ring area located in a control feature zone of the exemplary recording medium shown in Fig. 1;

Fig. 3 is a schematic block diagram of an exemplary optical recording media device in which a method for reading media information from optical recording media in accordance with an embodiment of the invention may be implemented;

Fig. 4 is a flowchart of a method for reading media information from optical recording media in accordance with an embodiment of the invention;

Fig. 5 illustrates a layout of a control feature zone and index mark pattern of the exemplary recording medium shown in Fig. 1;

Fig. 6 is a diagrammatic representation of various space intervals used for detecting an index mark;

Fig. 7 is a diagrammatic representation of a position for detecting an index mark in a control feature outer ring area in accordance with an embodiment of the invention; and

Fig. 8 is a flowchart of a method for reading media information from optical recording media in accordance with an embodiment of the invention.

### DETAILED DESCRIPTION OF PREFERRED EMBODIMENTS

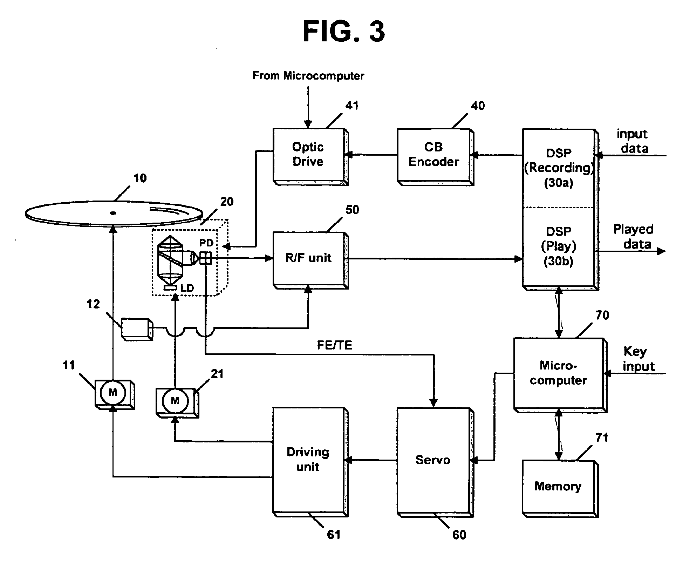

Fig. 3 is a schematic block diagram of an optical recording media device in which a method for reading media information from optical recording media in accordance with an embodiment of the invention may be implemented. The optical recording media device includes a digital recording signal processor 30a that receives digital data and converts it to a recording format; a channel bit encoder 40 that receives data in the recording format and converts it to a bit stream; an optical drive 41 that outputs a light amount driving signal based on a signal input thereto; an optical pick-up 20 that records data on an optical recording medium 10 based on the light amount driving signal, and detects data from a recording surface of the recording medium 10; a radio frequency (R/F) unit 50 for filtering and wave-forming signals detected by the optical pick-up 20 and outputting the filtered and wave-formed signals as a binary signal; a driving unit 61 for driving a spindle motor 11 which rotates the optical recording medium 10; a sled motor 21 which moves the optical pick-up 20; a servo 60 for controlling the driving unit 61 based on a tracking error signal TE and a focus error signal FE output by the optical pick-up 20 and rotation speed of the optical recording medium 10; a digital play signal processor 30b that restores the binary signal to the original data using its own clocks which are synchronous to a phase of the binary signal; a memory 71, for storing media information such as a media ID; and a microcomputer 70 for reading media information from the optical recording medium 10 mounted on a disc driver, storing the read media information in the memory 71 and transmitting the media information to an external host, and controlling and performing a requested recording or playback operation.

If the optical recording media device is capable of performing a label printing operation, the optical recording media device also includes a spoke detector 12 that detects a spoke of a speed control feature area of an optical recording medium 10 that includes a label surface, such as, for example, the LightScribe disc discussed above. More particularly, based on the signal output by the spoke detector 12, the device may determine if the inserted disc 10 includes a label surface such as, for example, the LightScribe disc discussed above, and may also control the rotation speed of the disc 10.

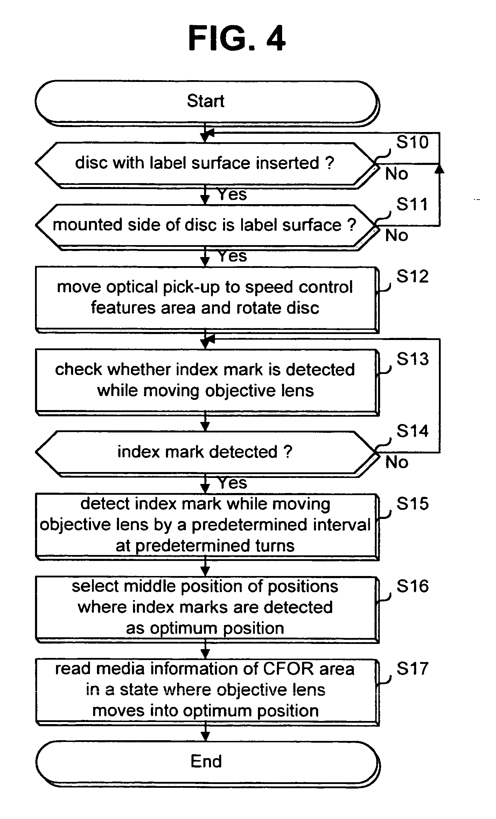

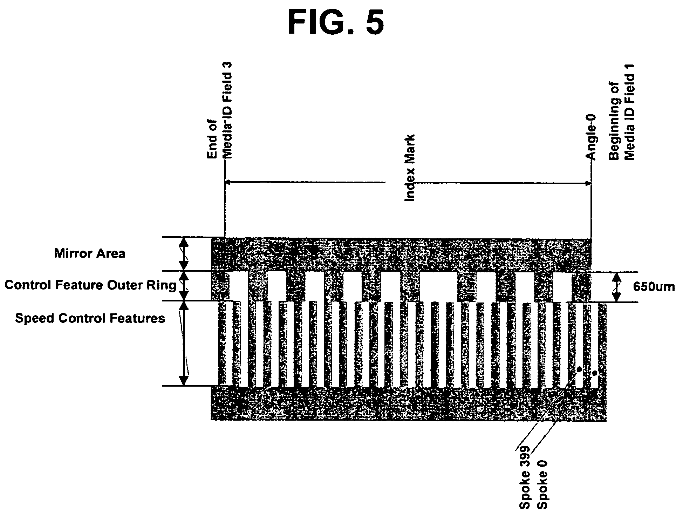

Fig. 4 is a flowchart of a method for reading media information from optical recording media in accordance with an embodiment of the invention, and will described in detail below with reference also to Fig. 3. Fig. 5 illustrates a layout of a control feature zone, including a mirror area, a control feature outer ring (CFOR) area, a speed control feature area, and an index mark pattern on an optical recording disc as discussed above.

The overall size, or width, of the CFOR area shown in Fig. 5 is approximately 650µm. A width of 650 µm, and corresponding center area size of 350 µm and outer and inner circumferences of 150 µm each, are referred to herein simply for ease of discussion. Other overall and relative sizes for these areas may also be appropriate. If there is an eccentricity component present on the disc, the widths of approximately 150µm from the outer and inner circumferences of the CFOR area surrounding a center area of approximately 350 µm are affected by the eccentricity component while, the center area of 350µm in the CFOR area is not affected by the eccentricity component. Therefore, the center area of 350µm is referred to as a stable area, and if an operation for reading out media information is performed at the center area of 350µm in the CFOR area, the media information can be stably read, while reading media information from the inner and outer areas of 150 µm may result in some instability. Thus, if index marks can be detected at three positions or more which are spaced substantially the same distance apart, and the distance is set such that at least one of the positions at which the index marks are detected is located in the stable area, then an operation for reading out media information can be performed in a stable manner.

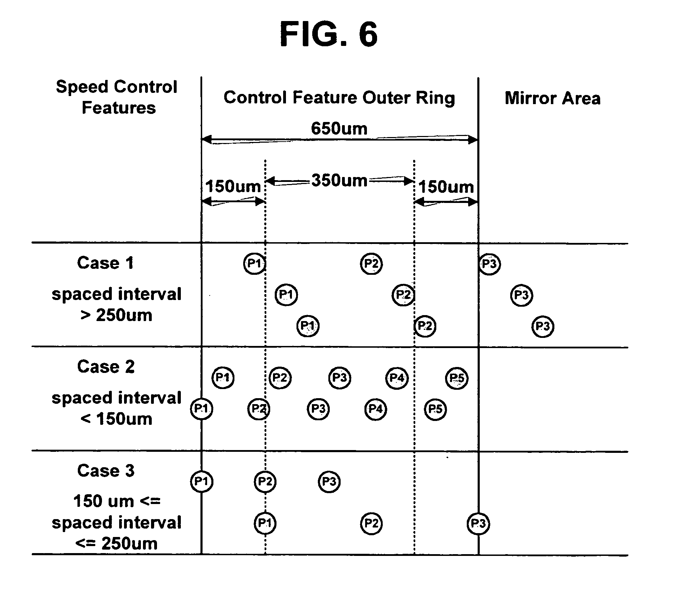

In the exemplary control feature zone shown in Fig. 5, the width of the CFOR is approximately 650µm, with a tolerance of eccentricity of approximately 150µm. Based on this exemplary control feature zone, if the interval between index marks is larger than 250µm, as shown in Fig. 6 (Case 1), when the first positions P1 are located at a boundary of the inner circumference close to the stable area, index marks at the third positions P3 may fall outside the CFOR and may no be detected. Also, when index marks are detected at only two positions, it is difficult to discern which of the first and second positions is located in the stable area. Therefore, in this case, an upper limit of the interval between index marks may be defined by approximately 250µm, given a stable area of approximately 350 µm and a tolerance of eccentricity of approximately 150 µm in a CFOR of approximately 650 µm.

Further, the smaller the interval is between index marks, the greater the number of positions to be detected for the index marks. As shown in Fig. 6, if the interval between index marks is less than 150µm (Case 2), the number of corresponding positions for detecting index marks to locate the stable area can be 5 or more. Therefore, if detection for the index marks is tried at only three positions, then the lower limit for the interval between index marks is 150µm. Further, if detection for the index marks is tried at only three positions, the distance between index marks should be set between 150µm and 250µm (Case 3). In one embodiment of the invention, the interval between index marks may be set to approximately 200µm.

As shown in Fig. 4, when an optical disc 10 is inserted into an optical recording media device such as the device as shown in Fig. 3, the microcomputer 70 determines whether the inserted optical disc 10 includes a label surface, such as the LightScribe disc discussed above, based on the output signal form the spoke detector 12 in step S10. If it is determined that the disc 10 includes a label surface, the microcomputer 70 moves the optical pick-up 20 to a label area of the optical disc 10, and searches for a peak point of an RF sum to determine if a seated side of the optical disc 10 is a label surface in step S11. If the seated side of the disc 10 is a label surface, the microcomputer 70 moves the optical pick-up 20 to the speed control features area of the label surface, which is typically positioned at the innermost circumference of the optical disc 10, and drives the spindle motor 11 to rotate the optical disc 10 in step S12.

The microcomputer 70 then moves an objective lens (not shown) of the optical pick-up 20 in an outward direction of the optical disc 10 such that the objective lens can enter the CFOR area, and checks whether index marks have been detected in step S13. Here, the microcomputer 70 successively detects positions of the objective lens as it moves from its initial position in the speed control feature area based on driving values of the driving unit 61 and other related parameters.

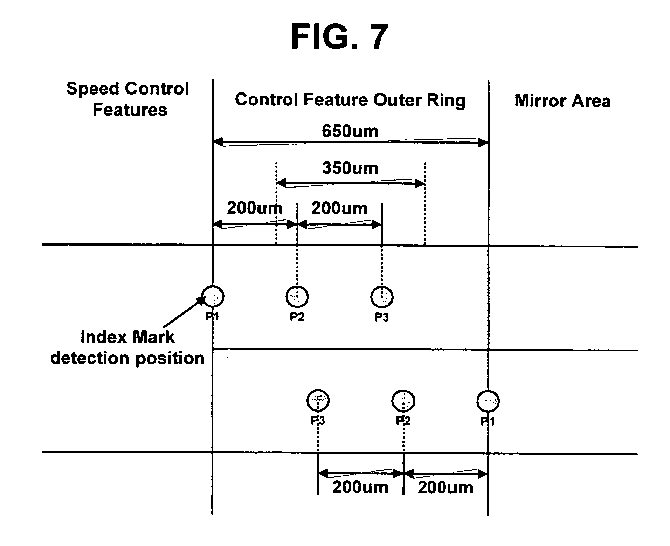

When the first index mark is detected as the objective lens is moved and enters the CFOR area in step S14, the microcomputer 70 moves the objective lens in an outward direction of the disc 10 from the detection position . For example, the objective lens moves from P1 to P2, as shown in Fig. 7, by a predetermined interval to detect an index mark, and then moves in an outward direction, again by a predetermined interval, to P3 to detect an index mark in step S15. For ease of discussion and illustration, a predetermined interval of approximately 200 µm is shown in Fig. 7. However, other intervals may also be appropriate. Since the microcomputer 70 successively detects positions of the objective lens from the initial position, the detection positions P1, P2 and P3 of the index marks can be confirmed.

After successively detecting the index marks at the positions P1, P2 and P3, the microcomputer 70 determines the center of the positions in which the index marks are detected and establishes this center as the optimum position in step S16. For example, the microcomputer selects an n-th position as the optimum position if the index marks are detected at 2n-1 positions. Thus, if the index marks are successively detected at three positions, the microcomputer 70 selects the second position as the optimum position. From the above example, when the index marks are successively detected at seven positions, since the third to fifth positions are in the stable area, a position between the third and the fifth positions may be selected as the optimum position.

Index marks may be detected at 2n positions which are spaced apart at the same predetermined interval in the CFOR area. In this case, if the width of the CFOR area is approximately 650µm, as in the example discussed above, and n is 2, then the predetermined interval may be set to approximately 150µm. In this instance, when index marks are successively detected at 2n positions in the CFOR area, or, for example, 4 positions, the microcomputer 70 selects the center position between the first position and the last position as the optimum position. For example, if index marks are successively detected at four positions, since the second and third position are in the stable area, a position between the second and the third positions is selected as the optimum position.

When such an optimum position is selected, the microcomputer 70 moves the objective lens of the optical pick up 20 to the optimum position, and then reads out media information recorded in the CFOR area in step S17. Therefore, although the optical disc 10 may be subject to an eccentricity component, media information can still be stably read from the disc 10, stored in the memory 71, and transmitted to the host. Data transmitted from the host may then be recorded on the label surface of the optical disc 10.

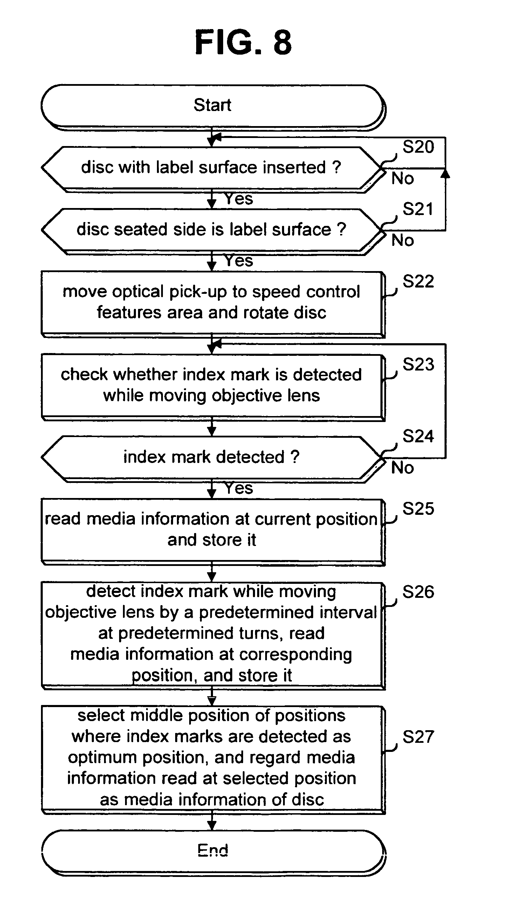

Fig. 8 is a flowchart of a method for reading media information from optical recording media in accordance with another embodiment of the invention. The method shown in Fig. 8 detects the index marks at 2n-1 positions which are spaced a predetermined distance apart in the CFOR area of the disc 10. In this embodiment, the microcomputer 70 reads out media information from each of the corresponding positions at which the index marks are detected in the CFOR area, and then stores the read information in the memory 71 in steps S20∼S26.

Once the index marks are successively detected at 2n-1 positions and corresponding media information has been read from each of the 2n-1 positions and stored, the microcomputer 70 selects the center position from amongst the positions at which the index marks have been detected as the optimum position. The microcomputer 70 then regards media information which was read out from the selected optimum position and stored, as the media information of the inserted optical disc 10 in step S27. As discussed above, the microcomputer 70 selects the n-th position as the optimum position if index marks are detected at 2n-1 positions. The microcomputer 70 then transmits the corresponding media information to the host, and records data transmitted from the host onto a label surface of the optical disc 10.

As set forth above, the methods for reading media information from optical recording media in accordance with embodiments of the invention allow media information to be rapidly and stably read from the recording media, and allow a recording operation to be rapidly and accurately performed on the label surface of the recording media.

## Claims

1. A method of reading medium information on a label surface of an optical recording medium, comprising:
- determining whether a prescribed pattern providing information regarding a radial position on the label surface is detected at a plurality of radial positions on a recording medium;
- selecting a radial position based on detection of the prescribed pattern, wherein the selected radial position corresponds to a radial position located between an innermost radial position and an outermost radial position of the plurality of successive radial positions; and
- obtaining the medium information identifying the optical recording medium at the selected radial position.

2. The method of claim 1, wherein selecting a radial position comprises selecting a radial position which is near the middle of the innermost and outermost radial positions.

3. The method of claim 1, wherein selecting a radial position comprises selecting a radial position which is near the middle position of the plurality of successive radial positions if there is an odd number of successive radial positions.

4. The method of claim 1, 2 or 3, wherein the plurality of radial positions are spaced from each other by a prescribed distance.

5. The method of claim 4, wherein the recording medium is an optical disc having a non-data side specially prepared for burning or etching an image thereon by a laser and the prescribed pattern is provided in a control feature outer ring area.

6. The method of claim 5, wherein the prescribed pattern corresponds to an index mark pattern of an optical disc having a non-data side specially prepared for burning or etching an image thereon by a laser.

7. The method of claim 4, wherein obtaining medium information at the selected radial position comprises obtaining Media ID that indicates that the recording medium is an optical disc having a non-data side specially prepared for burning or etching an image thereon by a laser.

8. The method of claim 4, wherein the prescribed distance is at least 150 micrometers.

9. The method of claim 8, wherein the prescribed distance is less than 250 micrometers.

10. The method of claim 9, wherein the prescribed distance is approximately 200 micrometers.

11. The method of claim 1, wherein selecting a radial position from a plurality of successive radial positions comprises selecting an n^{th} position if there are 2n-1 successive radial positions.

12. The method of claim 1, wherein determining whether a prescribed pattern is detected at a plurality of radial positions on a recording medium comprises moving an optical pickup from an innermost position of the plurality of radial positions in a radial direction of the recording medium toward an outermost position of the plurality of radial positions.

13. The method of claim 1, wherein determining whether a prescribed pattern is detected at a plurality of radial positions on a recording medium comprises moving an optical pickup from an outermost position of the plurality of radial positions in a radial direction of the recording medium toward an innermost position of the plurality of radial positions.

14. The method of claim 2, wherein the number of successive radial positions is greater than 2.

15. The method of claim 2, wherein the number of successive radial positions is 3 and the selected optimal position is the second position within the plurality of successive radial positions.

16. The method of claim 1, wherein determining whether a prescribed pattern is detected on a recording medium comprises searching for the prescribed pattern in a control feature outer ring area of the recording medium.

17. The method of claim 1, wherein selecting a radial position from a plurality of successive radial positions comprises selecting a position between an n^{th} position and an (n+1)^{th} position if the number of successive radial positions is 2n.

18. A method for determining medium information on a label surface of an optical recording medium, comprising:
- detecting a first prescribed pattern at a first radial position of the recording medium and storing information provided at the first radial position during a revolution of the recording medium;
- detecting a second prescribed pattern at a second radial position of the recording medium and storing information provided at the second radial position during a revolution of the recording medium;
- detecting a third prescribed pattern at a third radial position of the recording medium and storing information provided at the third radial position during a revolution of the recording medium, the first, second and third prescribed patterns providing information regarding the first, second and third radial positions, respectively, on the recording medium; and
- using the information stored during the revolution corresponding to the detection of the second prescribed pattern as the medium information identifying the recording medium.

19. The method of claim 18, further comprising providing the first, second and third radial positions by radial movement of the recording medium during rotation.

20. The method of claim 18 or 19, wherein the first, second and third positions are spaced apart from each other by a prescribed distance.

21. The method of claim 18 wherein the recording medium is an optical disc having a non-data side specially prepared for burning or etching an image thereon by a laser and the first, second and third prescribed patterns are provided in a control feature outer ring area of the optical disc having a non-data side specially prepared for burning or etching an image thereon by a laser.

22. The method of claim 18, wherein the first, second and third prescribed patterns correspond to an index mark of an optical disc having a non-data side specially prepared for burning or etching an image thereon by a laser.

23. The method of claim 18, wherein the medium information corresponds to Media ID which indicates that the recording medium is a optical disc having a non-data side specially prepared for burning or etching an image thereon by a laser.

24. The method of claim 19, wherein the prescribed distance is at least 150 micrometers.

25. The method of claim 24, wherein the prescribed distance is less than 250 micrometers.

26. The method of claim 25, wherein the prescribed distance is approximately 200 micrometers.

## Patentansprüche

1. Verfahren zum Lesen von Mediuminformation auf einer Etikettenoberfläche eines optischen Aufzeichnungsmediums, mit den Schritten:
- Bestimmen, ob ein vorgeschriebenes Muster, welches Information bereitstellt, hinsichtlich einer radialen Position auf der Etikettenoberfläche bei einer Vielzahl von radialen Positionen auf einem Aufzeichnungsmedium detektiert wird;
- Auswählen einer radialen Position basierend auf der Detektion des vorgeschriebenen Musters, wobei die ausgewählte radiale Position einer zwischen einer innersten radialen Position und einer äußersten radialen Position der Vielzahl von aufeinanderfolgenden radialen Positionen liegenden radialen Position entspricht; und
- Erhalten der Mediuminformation durch Identifizierung des optischen Aufzeichnungsmediums bei der ausgewählten radialen Position.

2. Verfahren nach Anspruch 1, wobei das Auswählen einer radialen Position das Auswählen einer radialen Position umfasst, welche nahe der Mitte zwischen der innersten und äußersten radialen Position liegt.

3. Verfahren nach Anspruch 1, wobei das Auswählen einer radialen Position das Auswählen einer radialen Position umfasst, welche nahe der Mittelposition der Vielzahl von aufeinanderfolgenden radialen Positionen ist, wenn es eine ungerade Anzahl von aufeinanderfolgenden radialen Positionen gibt.

4. Verfahren nach Anspruch 1, 2, oder 3, wobei die Vielzahl von radialen Positionen voneinander durch einen vorgeschriebenen Abstand beabstandet sind.

5. Verfahren nach Anspruch 4, wobei das Aufzeichnungsmedium eine optische Platte mit einer datenfreien Seite ist, die speziell für das Brennen oder Ätzen eines Bildes darauf durch einen Laser präpariert ist, und das vorgeschrieben Muster in einem Steuermerkmalsaußenringbereich vorgesehen ist.

6. Verfahren nach Anspruch 5, wobei das vorgeschrieben Muster einem Indexmarkenmuster einer optischen Platte mit einer datenfreien Seite entspricht, die speziell für das Brennen oder Ätzen eines Bildes darauf durch einen Laser präpariert ist.

7. Verfahren nach Anspruch 4, wobei das Erhalten von Mediuminformation bei der ausgewählten radialen Position das Erhalten von Media ID umfasst, welche anzeigt, das das Aufzeichnungsmedium eine optische Platte mit einer datenfreien Seite ist, die speziell für das Brennen oder Ätzen eines Bildes darauf durch einen Laser präpariert ist.

8. Verfahren nach Anspruch 4, wobei der vorgeschriebene Abstand zumindest 150 Mikrometer ist.

9. Verfahren nach Anspruch 8, wobei der vorgeschriebene Abstand weniger als 250 Mikrometer ist.

10. Verfahren nach Anspruch 9, wobei der vorgeschriebene Abstand ungefähr 200 Mikrometer ist.

11. Verfahren nach Anspruch 1, wobei das Auswählen einer radialen Position von einer Vielzahl von aufeinanderfolgenden radialen Positionen das Auswählen einer n-ten Position umfasst, wenn es 2n-1 aufeinanderfolgende radiale Positionen gibt.

12. Verfahren nach Anspruch 1, wobei das Bestimmen, ob ein vorgeschriebenes Muster bei einer Vielzahl von radialen Positionen auf einem Aufzeichnungsmedium detektiert wird, das Bewegen eines optischen Abnehmers von einer innersten Position der Vielzahl von radialen Positionen in einer Radialrichtung des Aufzeichnungsmediums in Richtung einer äußersten Position der Vielzahl von radialen Positionen umfasst.

13. Verfahren nach Anspruch 1, wobei das Bestimmen, ob ein vorgeschriebenes Muster bei einer Vielzahl von radialen Positionen auf einem Aufzeichnungsmedium detektiert wird, das Bewegen eines optische Abnehmers von einer äußersten Position der Vielzahl von radialen Positionen in einer Radialrichtung des Aufzeichnungsmediums in Richtung einer innersten Position der Vielzahl von Radialpositionen umfasst.

14. Verfahren nach Anspruch 2, wobei die Anzahl von aufeinanderfolgenden radialen Positionen größer als 2 ist.

15. Verfahren nach Anspruch 2, wobei die Anzahl von aufeinanderfolgenden radialen Positionen drei ist und die ausgewählte optimale Position die zweite Position innerhalb der Vielzahl von aufeinanderfolgenden radialen Positionen ist.

16. Verfahren nach Anspruch 1, wobei das Bestimmen, ob ein vorgeschriebenes Muster auf einem Aufzeichnungsmedium detektiert wird, das Suchen eines vorgeschriebenen Musters in einem Steuermerkmalsaußenringbereich des Aufzeichnungsmediums umfasst.

17. Verfahren nach Anspruch 1, wobei das Auswählen einer radialen Position von einer Vielzahl von aufeinanderfolgenden radialen Positionen das Auswählen einer Position zwischen einer n-ten Position und einer (n+1)-ten Position umfasst, wenn die Anzahl von aufeinanderfolgenden radialen Positionen gleich 2n ist.

18. Verfahren zum Bestimmen einer Mediuminformation auf einer Etikettenoberfläche eines optischen Aufzeichnungsmediums, mit:
- Detektieren eines ersten vorgeschriebenen Musters bei einer ersten radialen Position des Aufzeichnungsmediums und Speichern der Information, die bei der ersten radialen Position während eines Umlaufs des Aufzeichnungsmediums geliefert wird;
- Detektieren eines zweiten vorgeschriebenen Musters bei einer zweiten radialen Position des Aufzeichnungsmediums und Speichern der Information, die bei der zweiten radialen Position während eines Umlaufs des Aufzeichnungsmediums geliefert wird;
- Detektieren eines dritten vorgeschriebenen Musters bei einer dritten radialen Position des Aufzeichnungsmediums und Speichern der Information, die bei der dritten radialen Position während eines Umlaufs des Aufzeichnungsmediums geliefert wird, wobei das erste, das zweite und das dritte vorgeschriebene Muster Information hinsichtlich der ersten, der zweiten bzw. der dritten radialen Position auf dem Aufzeichnungsmedium liefert;
- Verwenden der während des Umlaufs gespeicherten Information, die der Detektion des zweiten vorgeschriebenen Musters entspricht, als Mediuminformation zur Identifizierung des Aufzeichnungsmediums.

19. Verfahren nach Anspruch 18, ferner mit dem Vorsehen der ersten, der zweiten und der dritten radialen Position durch eine radiale Bewegung des Aufzeichnungsmediums während der Umdrehung.

20. Verfahren nach Anspruch 18 oder 19, wobei die erste, die zweite und die dritte Position voneinander durch einen vorgeschriebenen Abstand beabstandet sind.

21. Verfahren nach Anspruch 18, wobei das Aufzeichnungsmedium eine optische Platte mit einer datenfreien Seite ist, die speziell für das Brennen oder Ätzen eines Bildes darauf durch einen Laser präpariert ist, und das erste, das zweite und das dritte vorgeschriebene Muster in einem Steuermerkmalsaußenringbereich der optischen Platte vorgesehen sind, die eine datenfreie Seite aufweist, die speziell für das Brennen oder Ätzen eines Bildes darauf durch einen Laser präpariert ist.

22. Verfahren nach Anspruch 18, wobei das erste, das zweite und das dritte vorgeschriebene Muster einer Indexmarke einer optischen Platte mit einer datenfreien Seite entspricht, die speziell für das Brennen oder Ätzen eines Bildes darauf durch einen Laser präpariert ist.

23. Verfahren nach Anspruch 18, wobei die Mediuminformation der Media ID entspricht, die anzeigt, dass das Aufzeichnungsmedium eine optische Platte mit einer datenfreien Seite ist, die speziell für das Brennen oder Ätzen eines Bildes darauf durch einen Laser präpariert ist.

24. Verfahren nach Anspruch 19, wobei der vorgeschriebene Abstand zumindest 150 Mikrometer ist.

25. Verfahren nach Anspruch 24, wobei der vorgeschriebene Abstand weniger als 250 Mikrometer ist.

26. Verfahren nach Anspruch 25, wobei der vorgeschriebene Abstand ungefähr 200 Mikrometer ist.

## Revendications

1. Procédé pour lire des informations sur une surface d'une étiquette d'un support d'enregistrement optique, comprenant :
- de déterminer si un motif prescrit fournissant des informations concernant une position radiale sur la surface de l'étiquette est détecté à une pluralité de positions radiales sur un support d'enregistrement ;
- de sélectionner une position radiale en se basant sur la détection du motif prescrit, ladite position radiale sélectionnée correspondant à une position radiale située entre une position radiale la plus intérieure et une position radiale la plus extérieure de la pluralité de positions radiales successives ; et
- d'obtenir les informations identifiant le support d'enregistrement optique à la position radiale sélectionnée.

2. Procédé selon la revendication 1, dans lequel la sélection d'une position radiale comprend de sélectionner une position radiale qui est proche du milieu de la position radiale la plus intérieure et la position radiale la plus extérieure.

3. Procédé selon la revendication 1, dans lequel la sélection d'une position radiale comprend de sélectionner une position radiale qui est proche de la position du milieu de la pluralité de positions radiales successives s'il existe un nombre impair de positions radiales successives.

4. Procédé selon la revendication 1, 2 ou 3, dans lequel la pluralité de positions radiales sont espacées les unes des autres d'une distance prescrite.

5. Procédé selon la revendication 4, dans lequel le support d'enregistrement est un disque optique ayant un côté dépourvu de données , spécialement préparé pour exposer ou graver une image sur celui-ci par un laser, et le motif prescrit est prévu dans une zone annulaire extérieure constituant un moyen de contrôle.

6. Procédé selon la revendication 5, dans lequel le motif prescrit correspond à un motif formant une marque d'indexage d'un disque optique ayant un côté dépourvu de données spécialement préparé pour exposer ou graver une image sur celui-ci par un laser.

7. Procédé selon la revendication 4, dans lequel l'obtention des informations à la position radiale sélectionnée comprend d'obtenir un identificateur de support (ID) qui indique que le support d'enregistrement est un disque optique ayant un côté dépourvu de données spécialement préparé pour exposer ou graver une image sur celui-ci par un laser.

8. Procédé selon la revendication 4, dans lequel la distance prescrite est au moins 150 µm.

9. Procédé selon la revendication 8, dans lequel la distance prescrite est inférieure à 250 µm.

10. Procédé selon la revendication 9, dans lequel la distance prescrite est approximativement 200 µm.

11. Procédé selon la revendication 1, dans lequel la sélection d'une position radiale parmi une pluralité de positions radiales successives comprend de sélectionner une n-ième position s'il existe 2n-1 positions radiales successives.

12. Procédé selon la revendication 1, dans lequel la détermination de savoir si un motif prescrit est détecté à une pluralité de positions radiales sur un support d'enregistrement comprend de déplacer une tête de lecture optique depuis une position la plus intérieure parmi la pluralité de positions radiales dans une direction radiale du support d'enregistrement vers une position la plus extérieure parmi la pluralité de positions radiales.

13. Procédé selon la revendication 1, dans lequel la détermination de savoir si un motif prescrit est détecté à une pluralité de positions radiales sur un support d'enregistrement comprend de déplacer une tête de lecture optique depuis une position la plus extérieure parmi la pluralité de positions radiales dans une direction radiale du support d'enregistrement vers une position la plus intérieure parmi la pluralité de positions radiales.

14. Procédé selon la revendication 2, dans lequel le nombre de positions radiales successives est supérieur à 2.

15. Procédé selon la revendication 2, dans lequel le nombre de positions radiales successives est égal à 3 et la position optimale sélectionnée est la seconde position parmi la pluralité de positions radiales successives.

16. Procédé selon la revendication 1, dans lequel la détermination de savoir si un motif prescrit est détecté sur un support d'enregistrement comprend de rechercher le motif prescrit dans une zone annulaire extérieure formant moyen de contrôle du support d'enregistrement.

17. Procédé selon la revendication 1, dans lequel la sélection d'une position radiale parmi une pluralité de positions radiales successives comprend de sélectionner une position entre une n-ième position et une (n+1)-ième position si le nombre de positions radiales successives est égal à 2n.

18. Procédé pour déterminer des informations sur une surface d'une étiquette d'un support d'enregistrement optique, comprenant :
- de détecter un premier motif prescrit à une première position radiale du support d'enregistrement et de stocker des informations fournies à la première position radiale pendant une révolution du support d'enregistrement ;
- de détecter un second motif prescrit à une seconde position radiale du support d'enregistrement et de stocker les informations prévues à la seconde position radiale pendant une révolution du support d'enregistrement ;
- de détecter un troisième motif prescrit à une troisième position radiale du support d'enregistrement et de stocker des informations prévues à la troisième position radiale pendant une révolution du support d'enregistrement, le premier, le second et le troisième motif prescrit fournissant des informations concernant la première, la seconde et la troisième position radiale, respectivement, sur le support d'enregistrement ; et
- d'utiliser les informations stockées pendant la révolution et correspondant à la détection du second motif prescrit à titre d'informations identifiant le support d'enregistrement.

19. Procédé selon la revendication 18, comprenant en outre d'atteindre la première, la seconde et la troisième position radiale par un mouvement radial du support d'enregistrement pendant la rotation.

20. Procédé selon la revendication 18 ou 19, dans lequel la première, la seconde et la troisième position sont espacées les unes des autres d'une distance prescrite.

21. Procédé selon la revendication 18, dans lequel le support d'enregistrement est un disque optique ayant un côté dépourvu de données spécialement préparé pour exposer ou graver une image sur celui-ci par un laser, et le premier, le second et le troisième motif prescrit sont prévus dans une zone annulaire extérieure formant moyen de contrôle du disque optique ayant un côté dépourvu de données spécialement préparé pour exposer ou graver une image sur celui-ci par un laser.

22. Procédé selon la revendication 18, dans lequel le premier, le second et le troisième motif prescrit correspondent à une marque d'indexage d'un disque optique ayant un côté dépourvu de données spécialement préparé pour exposer ou graver une image sur celui-ci par un laser.

23. Procédé selon la revendication 18, dans lequel les informations correspondent à une identification de support (ID) qui indique que le support d'enregistrement est un disque optique ayant un côté dépourvu de données spécialement préparé pour exposer ou graver une image sur celui-ci par un laser.

24. Procédé selon la revendication 19, dans lequel la distance prescrite est au moins 150 µm.

25. Procédé selon la revendication 24, dans lequel la distance prescrite est inférieure à 250 µm.

26. Procédé selon la revendication 25, dans lequel la distance prescrite est approximativement 200 µm.
